# EUROPEAN PATENT APPLICATION

(11) **EP 1 480 143 A2**
(43) Date of publication of application: **24.11.2004**
(21) Application number: 04007544.2
(22) Date of filing: 29.03.2004
(51) Int. Cl.: G06F 17/60

(54) **Methods and structure for integrated management and presentation of pharmaceutical development information**

(30) Priority: 28.03.2003 US 458615 P; 16.05.2003 US 471443 P
(71) Applicant: Solutia Inc., St. Louis, Missouri 63141 (US)
(72) Inventor: Fischer, Alan Eric, 5023 Biberstein (CH); Lacy, Ronald M., Snoqualmie Washington 98065 (US)
(74) Representative: Albrecht, Thomas, Dr.

(57) **Abstract**

Methods and structures for integrated presentation of data from legacy systems utilized in pharmaceutical development enterprises. Aspects of the invention retrieve data from any of a plurality of legacy systems. The retrieved data may be converted to XML messages and may be forwarded through a centralized portal server for integrated presentation to a user. In another aspect of the invention, the XML messages may be used to automatically generate and submit regulatory submission information regarding the new pharmaceutical development. Legacy systems may include any systems used in pharmaceutical development including, for example: manufacturing, marketing, analytical services, clinical trials, registration, project management and lab management.

## Description

This application claims the benefit of U.S. provisional application Serial No. 60/458,615, filed March 28, 2003, and entitled Methods and Structure for Integrated Management and Presentation of Pharmaceutical Development Information, Attorney Docket No. 406278, filed under Express Mail Label EL927874775US, and U.S. provisional application Serial No. 60/471,443, filed May 16, 2003 and entitled Method and Structure For Integrated Management and presentation of Pharmaceutical Development Information.

### BACKGROUND OF THE INVENTION

The invention relates to centralized data management of customer and project information in a business enterprise and more specifically relates to automated methods and structures for integrated management of information relating to pharmaceutical product development from pre-clinical research through final regulatory filing processes including customer/project related information.

In the pharmaceutical industry, it is common that pharmaceutical companies who focus on discovery and marketing will outsource different elements of product development. It is common that a product development enterprise may include a number of groups internally. Such groups may include, for example, product marketing, product manufacturing, analytical services, product regulatory registration services, and clinical trial services. Each of these groups requires certain information regarding the pharmaceutical product. As presently practiced in the art each group develops its own data sets and maintains the data in its own structures and systems. This presents internal problems for the development enterprise in that data is often duplicated and/or segregated into disparate, often incompatible systems.

These problems are most evident, for example, in the process of preparing and submitting regulatory information for the new pharmaceutical entity. The disparate sources of data may be stored in numerous data processing systems or merely maintained as binders of paper information. In preparing necessary regulatory submissions, these disparate sources need to be located and re-entered into appropriate documents for the regulatory submission. Often data is pasted from numerous sources or simply re-keyed into yet another system intended for regulatory submissions.

In addition, the enterprise may benefit from reporting certain sets of the data to the customer (often a larger pharmaceutical manufacturing enterprise). The customer may wish to view certain project scheduling or pricing information, or may wish to observe or comment on the analytical process in the development. As presently practiced, such customer presentations of data similarly require manual gathering and collation of required information.

Manual processes to gather and collate data for customer presentation or for regulatory submissions are both time consuming and error prone. However, conversion of all systems and data sources employed in such a development process to simplify data gathered through enhanced interchangeability can lead to other more serious consequences. Reliability and repeatability of pharmaceutical development processes is key to the level of quality required in such product developments. Changes to older existing systems (i.e., "legacy systems"), if possible or permitted at all, must be carefully planned and tested. The efforts involved in such careful conversion preclude many enterprises from enacting such changes.

It is evident from the above discussion that an ongoing need exists for improved integration of the various data sources employed in a pharmaceutical development enterprise. However, such integration cannot impact the reliability and repeatability of existing legacy systems.

### SUMMARY OF THE INVENTION

The present invention solves the above and other problems, thereby advancing the state of the useful arts, by providing methods and associated structures for enabling effective integration of disparate data sources within a pharmaceutical development enterprise. The integration provided by features and aspects of the invention permits automated production and assembly of regulatory submission information and permits improved total visibility of the drug development process. The enhanced integration is provided without impact to existing legacy systems.

In one aspect of the invention, a portal user interface may be provided to permit enterprise personnel or outside customers to access data gathered from disparate legacy systems and to view the information in a standardized, unified format. Other aspects of the invention automatically gather information from the disparate legacy systems and to collate and format the gathered information to produce required regulatory submissions for the new product. Another aspect of the invention provides for an XML generator engine coupled to each of the legacy systems. The XML generator engine extracts information as requested from each of the legacy systems associated with the enterprise. The extracted information may be reformatted as standard XML format tagged data in compliance with industry standards. The XML data so generated upon request may then be presented to users through a portal interface using, for example, standard Web browser client/server technologies. Further, the generated XML data may be utilized by aspects of the invention to generate required reports and submissions for regulatory processing of the new pharmaceutical product.

A first feature hereof provides a method for pharmaceutical development data management comprising: retrieving data from a plurality of legacy data processing systems useful in aspects of pharmaceutical development; reformatting the retrieved data into XML data; and presenting the XML data to a user through a browser client program.

Another aspect hereof further provides for generating regulatory submission information from the retrieved data; and reformatting the generated regulatory submission information for additional processing.

Another aspect hereof further provides that the step of reformatting the generated regulatory submission information includes: reformatting generated regulatory submission information according to XML DTDs for additional processing or approvals.

Another aspect hereof further provides that the step of presenting includes: displaying a synthesis plan for development of a pharmaceutical such that the synthesis plan is derived from the retrieved data.

Another aspect hereof further provides that the step of displaying further includes: displaying chemical synthesis information including molecular drawings and chemical reaction information, such that the chemical synthesis information is derived from the retrieved data.

Another aspect hereof further provides that the step of displaying further includes: displaying analysis data integrated with the display of the chemical synthesis information, such that the analysis data is derived from the retrieved data.

Another aspect hereof further provides that the step of presenting includes: displaying customer accounting information such that the customer accounting information is derived from the retrieved data.

Another aspect hereof further provides that the plurality of legacy data processing systems are geographically dispersed and that the step of presenting includes: displaying retrieved data retrieved from a legacy system at a first geographic location to a user at a second geographic location.

Another aspect hereof further provides that the step of retrieving comprises: retrieving data from the plurality of legacy data processing systems such that each of the plurality of legacy data processing systems is one of the following data processing systems: marketing, pharmaceutical ingredient project management, lab management, analytical services, clinical trial data management and clinical trial statistical analysis.

Another aspect hereof further provides that the step of retrieving data from the plurality of legacy data processing systems comprises: linking related project data from the plurality of legacy data processing systems into a single common project.

Another feature hereof provides a system for presentation of pharmaceutical development information comprising: a retrieval engine, responsive to user queries, for retrieving information from any of a plurality of legacy data processing systems each having at least a portion of the pharmaceutical development information; an XML converter, communicatively coupled to the retrieval engine for reformatting the retrieved information as XML messages; and a portal server system, communicatively coupled to the retrieval engine and to the XML converter for presenting the XML messages to a requesting user.

Another aspect hereof further provides a Web browser client communicatively coupled to the portal server system for presentation of the XML messages to the requesting user of the Web browser.

Another aspect hereof further provides an enterprise internal network communication medium coupling the Web browser client to the portal server system to present the XML messages to users within the enterprise.

Another aspect hereof further provides a public network communication medium coupling the Web browser client to the portal server system to present the XML messages to users outside the enterprise providing the portal server.

Another aspect hereof further provides a plurality of legacy data processing systems communicatively coupled to the retrieval engine such that each legacy system has portions of the pharmaceutical development information.

Another aspect hereof further provides that each legacy system provides at least one of the functions of: marketing, pharmaceutical ingredient project management, lab management, analytical services, clinical trial data management and clinical trial statistical analysis.

Another aspect hereof further provides that each portion of the pharmaceutical development information relates to at least one of: marketing, pharmaceutical ingredient project management, lab management, analytical services, clinical trial data management and clinical trial statistical analysis.

Another aspect hereof further provides a regulatory submission generator, communicatively coupled to the XML converter for automatically generating regulatory submission information pertaining to the pharmaceutical development information from the XML messages.

### BRIEF DESCRIPTION OF THE DRAWINGS

Figure 1 is a block diagram of a system providing integration of legacy data processing systems through a portal/collaboration system.
Figure 2 is a flowchart describing a method to process user interaction and regulatory submissions using information obtained from legacy systems and reformatted as required.
Figures 3-8 are example user display screens typifying user interactions involving a portal system presenting information derived from a plurality of legacy systems.

### DETAILED DESCRIPTION OF THE DRAWINGS

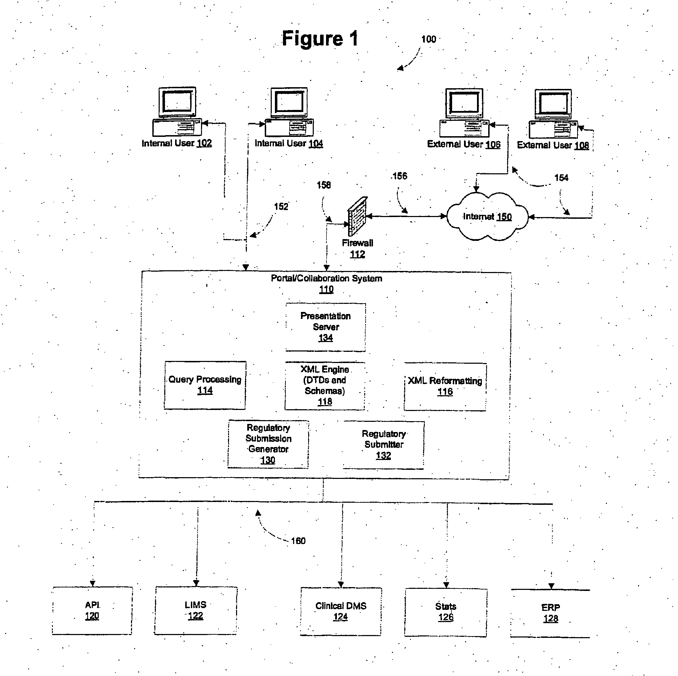

Figure 1 is a block diagram of a system 100 providing features and aspects of the present invention. System 100 includes portal/collaboration system 110 that generally provides a single point of contact for users 102, 104, 106 and 108 to access information relating to pharmaceutical development and marketing. A pharmaceutical development enterprise may provide portal/collaboration system 110 to permit both internal users (102 and 104) and external users or customers (106 and 108) simplified, integrated access to a variety of information sources associated with the pharmaceutical development enterprise.

As noted above, and systems presently known in the pharmaceutical development industry each provide functionality for a particular, narrow focus of the pharmaceutical development process (i.e., a 'silo" of information management). Features and aspects of the present invention present an integrated source for all information associated with the pharmaceutical development enterprise. Such integrated information presentation permits internal users (i.e., 102 and 104) to better collaborate in their joint efforts on behalf of the pharmaceutical development enterprise. Further, such an integrated source of information permits users external to the enterprise (i.e., external users 106 and 108) including, for example, customers, to simply access information regarding pharmaceutical development processes.

A further benefit of such integrated information arises in the ability to automate the generation of regulatory submissions associated with pharmaceutical developments. The information required for such regulatory submissions may be automatically gathered through features of system 100. Such an integrated information source provides more robust, reliable access to integrated data and reduces the likelihood of human-induced errors.

Portal/collaboration system 110 may interact with internal users 102 and 104 via network communication path 152. External users 106 and 108 may connect via their respective communication path 154 to Internet 150. Portal/collaboration system 110 then communicates with such external users via paths 158 and 156 coupled to Internet 150 through firewall protection 112. own in the art, firewall protection 112 helps secure portal/collaboration system 110 from unintended or undesired access by an external user coupled through the Internet 150.

Depending upon needs of a particular enterprise, internal users 102 and 104 coupled to portal/collaboration system 110 via network 152 may also be coupled through an appropriate firewall if such protection is required or desired. Further, those skilled in the art will recognize that any of a variety of network communication media and protocols may be employed to interconnect the various elements shown in figure 1.

Portal/collaboration system 110 interacts with legacy data processing systems 120 through 128 via communication link 160. As noted above, appropriate firewall protection may be provided between portal/collaboration system 110 and any of legacy data processing systems 120 through 128 where the needs of a particular application so demand. Such firewall application structures and methods are well known to those of ordinary skill in the art.

Legacy data processing systems 120 through 128 may include any of a plurality of data processing systems useful within a pharmaceutical development enterprise. Examples of such legacy systems may include a product research and development or manufacturing management system such as API 120. One example of such an active pharmaceutical ingredient (API) data processing system is presented in co-pending United States patent application 60/458,817 which is hereby incorporated by reference. In general, such development systems may provide project management as well as chemistry information such as the route to manufacture a new compound.

Other systems generally known as laboratory information management systems (LIMS) 122 may provide other management information pertaining to operations within a product development process. Clinical data management system (DMS) 124 may provide information management pertaining to clinical trial and evaluation procedures associated with regulatory compliance for pharmaceutical developments. STATS system 126 may provide statistical analysis information pertaining to results of clinical processes in the pharmaceutical development process. Enterprise resource planning (ERP) system 128 may provide more further planning features for allocation and scheduling of resources within the enterprise associated with the pharmaceutical development process.

Those of ordinary skill in the art will recognize that legacy data processing systems 120 through 128 are intended merely as exemplary of typical data processing systems associated with a pharmaceutical development enterprise. Numerous other legacy systems associated with such pharmaceutical development processes will be readily apparent to those of ordinary skill in the art.

In general, legacy data processing systems 120 through 128 store and retrieve data, generate reports from such data, and interact with users utilizing a wide variety of data formats, messaging formats, communication protocols and user interaction techniques. As noted above, such disparate data processing techniques make it difficult for users across different functions within the pharmaceutical development enterprise to effectively collaborate in their respective roles. Further, such disparate systems make it difficult or impossible for external users such as customers to review information pertaining to any aspects of their interaction with the pharmaceutical development enterprise. Lastly, such disparate data processing systems make it difficult to effectively collate required information for regulatory submissions and to quickly generate required regulatory reports.

Portal/collaboration system 110 therefore provides numerous features and aspects to hide the various disparate system interfaces and thereby provide a single, simple, integrated interface for user review of pharmaceutical development enterprise information. The portal/collaboration system 110 hides from the user details of interaction with the legacy data processing systems. Further aspects of portal/collaboration system 110 provide for automated generation of regulatory reports associated with pharmaceutical development processes.

Portal/collaboration system 110 may include a number of elements providing various features and aspects of present invention. Presentation manager service 134 may serve retrieved information to requesting users (i.e., users 102 through 108). In one example users 102 through 108 may utilize standard Web browser client programs while presentation manager element 134 provides related Web server processing. Other computing paradigms for communications between a user and portal/collaboration system 110 will be readily apparent to those of ordinary skill in the art. Web based client/server processing is therefore intended as one example of such user interaction.

Portal/collaboration system 110 may further include query processing element 114 to construct appropriate queries for legacy data processing systems 120 through 128 in response to user input received from users 102 through 108. A query generated by element 114 may be any form of query appropriate to the particular legacy data processing system or systems containing the requested information. Such queries may use, for example, SQL query processing or other query processing capabilities associated with other forms of database management. Queries generated by element 114 may also include manipulation of unstructured, flat files associated with particular legacy data processing systems. In short, element 114 generates any appropriate query processing to retrieve requested information from any of legacy systems 120 through 128 or from combinations of the legacy systems.

Information retrieved from legacy data processing systems 120 through 128 may be reformatted by processing of XML reformatting element 116. In one preferred example, all retrieved data is reformatted with associated XML tag information. Any standardized messaging formats may be utilized in conjunction with the processing of portal/collaboration system 110. In general, XML reformatting element 116 represents any processing required to reformat or translate retrieved information provided from legacy data processing systems into a standardized format for further processing. Other well-known standardized message formats including, for example, HTML, SGML, etc. may be used for such purposes.

XML engine 118 may comprise a number of standardized templates for reports to be generated in response to user inquiries. XML document type definitions (DTDs) and/or schemas may be provided in XML engine 118 to provide standardized formats for presentation of information retrieved from legacy systems 120 through 128. Industry standards such as CDISC (Clinical Data Interchange Standards Consortium) or the International Conference on Harmonization publish DTDs for XML interchange. As noted above, numerous similar standardized messaging formats may be employed in addition to the noted XML features. Templates appropriate to each such messaging infrastructure may be provided by element 118. Such design choices among message formatting standards are well-known to those of ordinary skill in the art.

Elements 114, 116, 118 and 134 of portal/communication system 110 provide features of the present invention to retrieve information from any of a plurality of legacy data processing systems and to present such information in standardized formats to requesting users. Additional features of the present invention are provided in regulatory submission generator 130. Regulatory submission generator 134 generates standardized, formatted information required by regulatory agencies associated with the particular pharmaceutical development. Such regulatory submissions often require information derived from one or more of the legacy data processing systems 120 through 128. Regulatory submission generator 130 is therefore operable to retrieve and reformat all information necessary for particular regulatory submissions.

The particular functional elements depicted within portal/collaboration system 110 are intended merely to suggest one possible structure for such a portal/collaboration system. Other functional decompositions will be readily apparent to those of ordinary skill in the art. Further, the various functional elements may be co-operable and resident within a single computing system or may be distributed over numerous computing systems utilizing well-known interprocess communication techniques. Further, those of ordinary skill in the art will recognize a wide variety of communication media and protocols useful for interconnecting devices and/or processes comprising the portal/collaboration system 110. A similar variety of communication media and protocols will be readily apparent to 110 with users 102 and 104 external users 106 and 108 through Internet 150 and various legacy data processing systems through communication path 160.

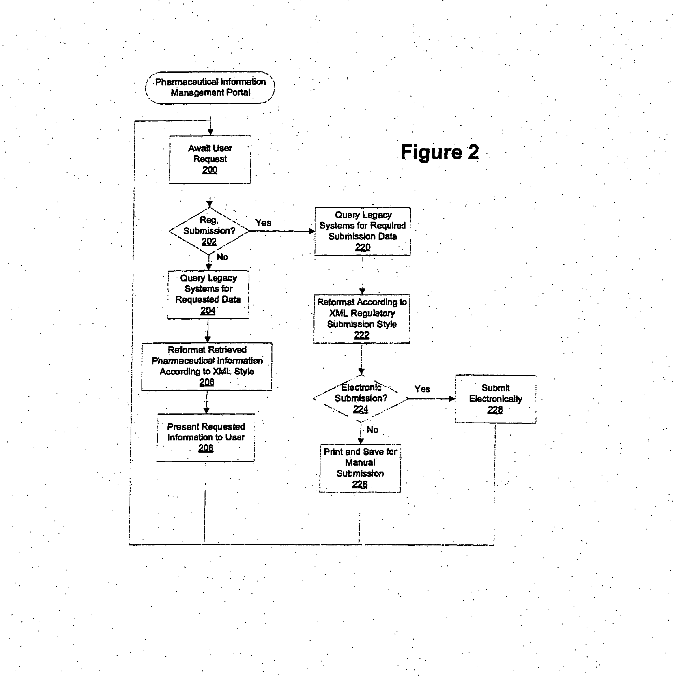

Figure 2 is a flowchart describing a method for pharmaceutical information management operable, for example, within portal/collaboration system 110 of figure 1. Element 200 of figure 2 is first operable to await receipt of a user request to process information within the pharmaceutical information management system (i.e., portal/collaboration system 110 of figure 1). Upon receipt of such a request, element 202 is next operable to determine if the received request indicates a user request to generate regulatory submission information. If not, the user request is for retrieving particular information and presenting the information to requesting user. Element 204 is therefore operable to query the legacy data processing systems to retrieve the requested information. Element 206 then reformats the retrieved pharmaceutical information according to XML defined templates (i.e., XML DTDs or schemas). As noted above, any of a variety of markup languages may be used to standardize the presentation of information retrieved from the various legacy data processing systems. Processing of element 206 therefore represents whatever processing is required to reformat retrieved information into the desired, standardized text description and markup language. Element 208 is then operable to present the reformatted information to the requesting user. As noted above, in one example of the invention, Web client/server user interaction techniques may be utilized to serve reformatted information to the requesting Web browser client. Other computing and communication paradigms will be readily apparent to those of ordinary skill in the art for presenting such reformatted information to requesting user. Processing then continues by looping back to element 200 to await receipt of the next user request.

If element 202 determines that the received request is for generation of regulatory submission information, element 220 is next operable to query appropriate legacy systems to retrieve information required for the requested regulatory submission. Having so retrieved required regulatory information, element 222 is then operable to reformat the retrieved information in accordance with appropriate regulatory submission format requirements. As above with respect to element 206, such reformatting may include formatting in accordance with XML DTDs or schemas or other text markup languages, The reformatted regulatory submission may be printed and/or modified to add additional information or text that was not available in legacy systems 120 through 128 on figure one. This document can then be saved for later approvals, updates and eventually for manual submission to appropriate regulatory agencies. Processing of the method then continues by looping back to element 200 to await a next user request.

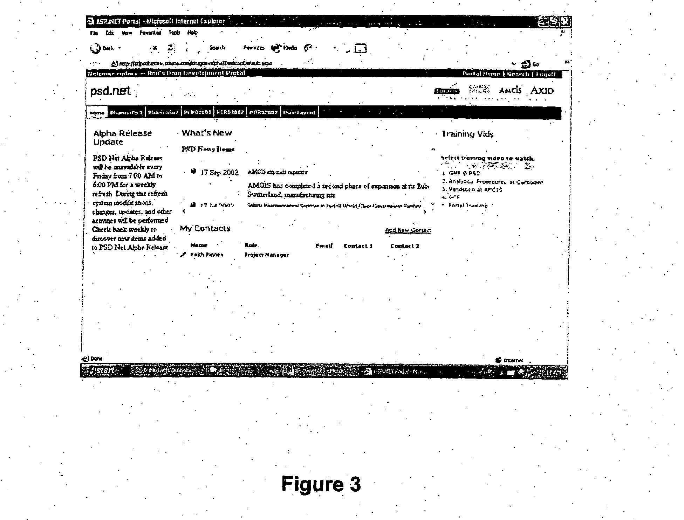

Figures 3 through 8 are exemplary computer display images useful for interacting with users of various features and aspects of the present invention. Figure 3 is an exemplary user interface display presented to a user accessing a portal/collaboration system for a pharmaceutical development enterprise. This ''user home page" display presents the user with general information about the enterprise and specific information related to projects with which the user is associated. A login process (not shown) may be employed to determine appropriate access for a user and to secure the system from inappropriate access to projects unrelated to that user. Such user login and security features secure the system from unintended access. Internal users may receive appropriate levels of access to permit collaboration with fellow workers. External users such as customers may receive appropriate levels of access to review information regarding that customer's interaction with the enterprise but may be restricted from accessing other information within the enterprise.

Other information appropriate to the logged in user may be displayed on the user home page as shown in figure 3. For example, internal users may be shown a list of other features and options useful for selecting and viewing information relating to multiple customers and proj ects. Internal enterprise news may be shown to internal users as distinguished from only public announcements shown to external users such as customers.

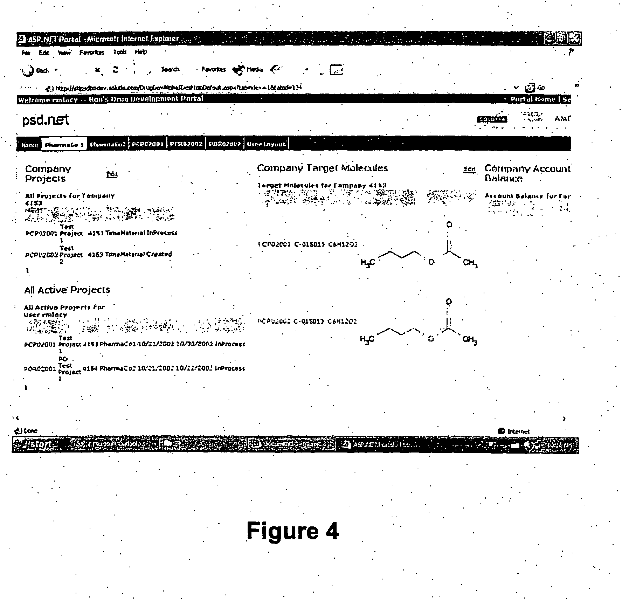

Figure 4 shows an exemplary display screen useful for displaying information relevant to a particular company or customer of the enterprise. The display may present all projects associated with the selected company. Where the logged in user is an internal user, the user may select the desired company from a list (not shown) of customers. Where a logged in user is an external user such as a customer, the company associated with that user may be automatically selected and other customer information may be secured from access by the logged in user.

The example display of figure 4 shows a list of all projects associated with the customer including a brief status of each project. In addition, a molecular description of the material to be produced in each product may be shown. Accounting information associated with the customer may also be displayed and summarized on a project basis or totaled for all projects of the customer. Such information presented in figure 4 is exemplary of operation of features and aspects hereof to retrieve information from any of multiple legacy system sources and to present the information in an integrated user interface. As noted above, the retrieved information may be converted to standardized message formats (such as XML) to facilitate portability of the information and rich formatting options. The information shown on the exemplary display of figure 4 may represent information from a legacy systems relating to chemistry/project management (i.e., API/ERP systems) and lab management (i.e., LIMS systems) as well as accounting/financial systems. The user need not be concerned with details of access methods for each legacy system nor with data formats of each system. Rather, a simpler, integrated user interface is presented by the portal system.

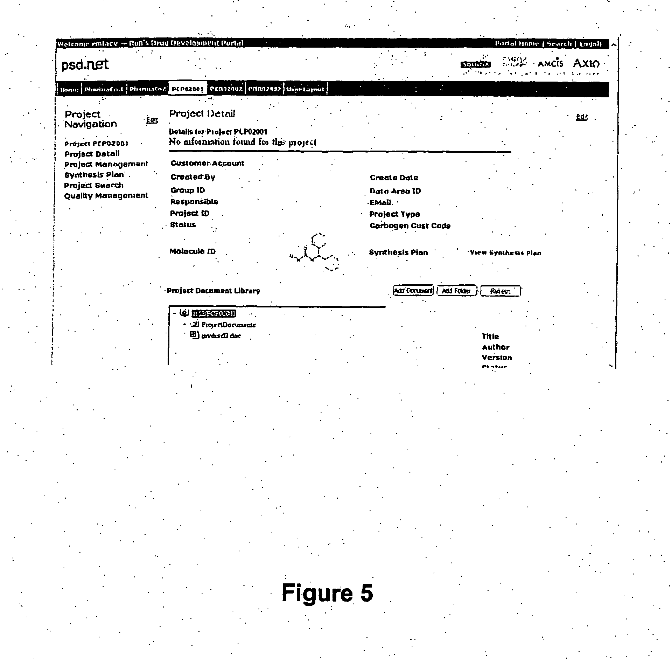

Figure 5 shows an exemplary user display screen providing details of a selected project. As above, the information presented may be retrieved from any of several legacy data processing systems. For example, project management and synthesis plan information may be presented retrieved and reformatted from a chemical development system and lab management system. Project information is shown as an initial summary and various options allow a user to "drill down" to view additional details. As above, the user needn't be concerned with details of the interaction with each individual legacy system. Rather the user is presented with a simpler, Web-based interface with all information retrieved and reformatted from the legacy systems by features and aspects of the portal/collaboration system.

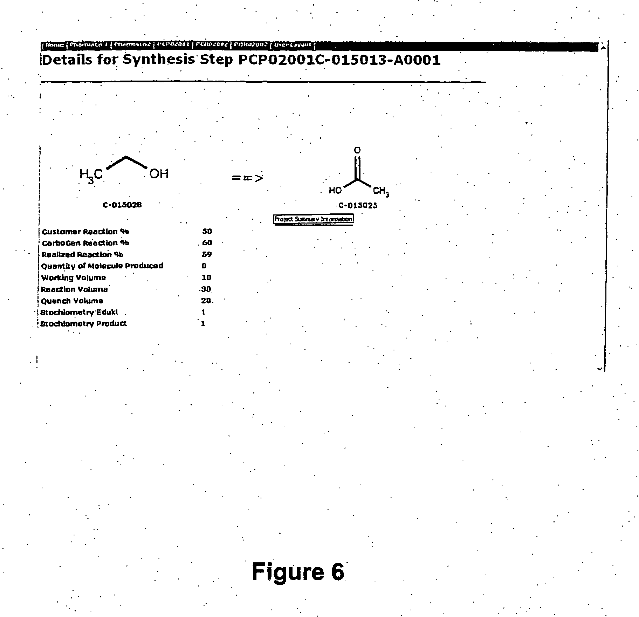

Figure 6 shows an example display screen presented to a user showing a particular step of a synthesis plan managed by a lab management or chemical development legacy system. User interface features standard in a Web browser interface permit the user to navigate forward and backward within the user interface of linked information without need to know of the details for interfacing with any of the underlying legacy systems that maintain the information. The user may therefore "drill down" to deeper levels of detail that are available and navigate back up to earlier layers of retrieved information.

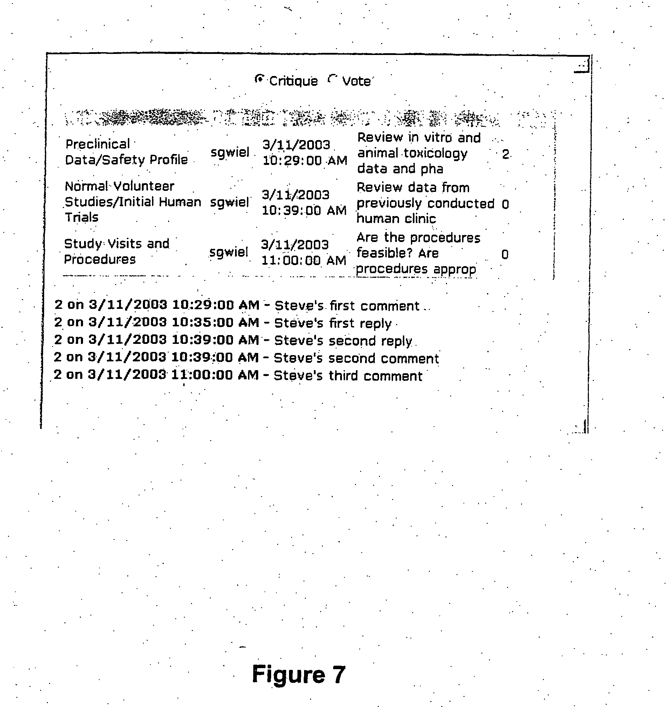

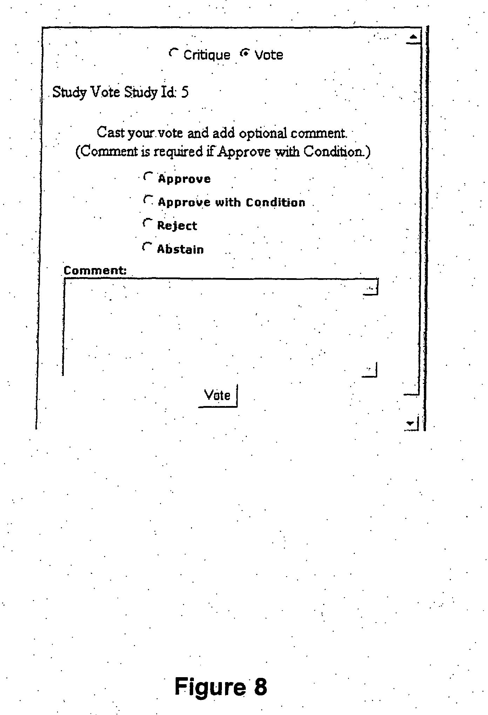

Figure 7 provides another example of "drilling down" to deeper clinical trial information within a supported clinical trial management legacy system. The exemplary display shows the ability to present clinical trial protocols using critiques, comments and votes. Such information may be managed by one or more legacy systems used for clinical trial data management. The portal/collaboration system features allow a user to navigate through such information using, for example, a Web browser client program interface without detailed knowledge of the structure or operation of underlying clinical trial data management legacy systems. Figure 8 shows another exemplary screen common for clinical trial data management wherein the user may enter a vote regarding a proposed clinical trial protocol. Again, as above, the user needn't have knowledge the underlying structure and operation of a clinical trial data management legacy system. Rather, the portal system hides such structure and operation from the user by automatically retrieving relevant information and reformatting the information to standardized message formats for exchange and presentation.

While the invention has been illustrated and described in the drawings and foregoing description, such illustration and description is to be considered as exemplary and not restrictive in character. One example of the invention and minor variants thereof have been shown and described. Protection is desired for all changes and modifications that come within the spirit of the invention. Those skilled in the art will appreciate variations of the above-described example that fall within the scope of the invention. As a result, the invention is not limited to the specific examples and illustrations discussed above, but only by the following claims and their equivalents.

## Claims

1. A method for pharmaceutical development data management comprising:
retrieving data from a plurality of legacy data processing systems useful in aspects of pharmaceutical development;
reformatting the retrieved data into XML data; and
presenting the XML data to a user through a browser client program.

2. The method of claim 1 further comprising:
generating regulatory submission information from the retrieved data; and reformatting the generated regulatory submission information for additional processing.

3. The method of claim 2 wherein the step of reformatting the generated regulatory submission information includes:
reformatting generated regulatory submission information according to XML DTDs for additional processing or approvals.

4. The method of claim 1 wherein the step of presenting includes:
displaying a synthesis plan for development of a pharmaceutical wherein the synthesis plan is derived from the retrieved data.

5. The method of claim 4 wherein the step of displaying further includes:
displaying chemical synthesis information including molecular drawings and chemical reaction information, wherein the chemical synthesis information is derived from the retrieved data.

6. The method of claim 5 wherein the step of displaying further includes:
displaying analysis data integrated with the display of the chemical synthesis information, wherein the analysis data is derived from the retrieved data.

7. The method of claim 1 wherein the step of presenting includes:
displaying customer accounting information wherein the customer accounting information is derived from the retrieved data.

8. The method of claim 1 wherein the plurality of legacy data processing systems are geographically dispersed and wherein the step of presenting includes:
displaying retrieved data retrieved from a legacy system at a first geographic location to a user at a second geographic location.

9. The method of claim 1 wherein the step of retrieving comprises:
retrieving data from the plurality of legacy data processing systems wherein each of the plurality of legacy data processing systems is one of the following data processing
systems: marketing, pharmaceutical ingredient project management, lab management, analytical services, clinical trial data management and clinical trial statistical analysis.

10. The method of claim 9 wherein the step of retrieving data from the plurality of legacy data processing systems comprises:
linking related project data from the plurality of legacy data processing systems into a single common proj ect.

11. A system for presentation of pharmaceutical development information comprising:
a retrieval engine, responsive to user queries, for retrieving information from any of a plurality of legacy data processing systems each having at least a portion of the pharmaceutical development information; an XML converter, communicatively coupled to the retrieval engine for reformatting the retrieved information as XML messages; and
a portal server system, communicatively coupled to the retrieval engine and to the XML converter for presenting the XML messages to a requesting user.

12. The system of claim 11 further comprising:
a Web browser client communicatively coupled to the portal server system for presentation of the XML messages to the requesting user of the Web browser.

13. The system of claim 12 further comprising:
an enterprise internal network communication medium coupling the Web browser client to the portal server system to present the XML messages to users within the enterprise.

14. The system of claim 12 further comprising:
a public network communication medium coupling the Web browser client to the portal server system to present the XML messages to users outside the enterprise providing the portal server.

15. The system of claim 11 further comprising:
a plurality of legacy data processing systems communicatively coupled to the 15 retrieval engine wherein each legacy system has portions of the pharmaceutical development information.

16. The system of claim 15 wherein each legacy system provides at least one of the functions of: marketing, pharmaceutical ingredient project management, lab management, analytical services, clinical trial data management and clinical trial statistical analysis.

17. The system of claim 11 wherein each portion of the pharmaceutical development information relates to at least one of: marketing, pharmaceutical ingredient project management, lab management, analytical services, clinical trial data management and clinical trial statistical analysis.

18. The system of claim 17 further comprising:
a regulatory submission generator, communicatively coupled to the XML converter for automatically generating regulatory submission information pertaining to the pharmaceutical development information from the XML messages.

19. A computer readable storage medium tangibly embodying program instructions to provide a method for pharmaceutical development data management, the method comprising:
retrieving data from a plurality of legacy data processing systems useful in aspects of pharmaceutical development;
reformatting the retrieved data into XML data; and
presenting the XML data to a user through a browser client program.

20. The medium of claim 19 the method further comprising:
generating regulatory submission information from the retrieved data; and
reformatting the generated regulatory submission information for additional processing.

21. The medium of claim 20 wherein the method step of reformatting the generated regulatory submission information includes:
reformatting generated regulatory submission information according to XMIL DTDs for additional processing or approvals.

22. The medium of claim 19 wherein the method step of presenting includes:
displaying a synthesis plan for development of a pharmaceutical wherein the synthesis plan is derived from the retrieved data.

23. The medium of claim 22 wherein the method step of displaying further includes:
displaying chemical synthesis information including molecular drawings and 25 chemical reaction information, wherein the chemical synthesis information is derived from the retrieved data.

24. The medium of claim 23 wherein the method step of displaying further includes:
displaying analysis data integrated with the display of the chemical synthesis information, wherein the analysis data is derived from the retrieved data.

25. The medium of claim 19 wherein the method step of presenting includes:
displaying customer accounting information wherein the customer accounting information is derived from the retrieved data.

26. The medium of claim 19 wherein the plurality of legacy data processing systems are geographically dispersed and wherein the method step of presenting includes:
displaying retrieved data retrieved from a legacy system at a first geographic location to a user at a second geographic location.

27. The medium of claim 19 wherein the method step of retrieving comprises:
retrieving data from the plurality of legacy data processing systems wherein each of the plurality of legacy data processing systems is one of the following data processing systems: marketing, pharmaceutical ingredient project management, lab management, analytical services, clinical trial data management and clinical trial statistical analysis.

28. The medium of claim 27 wherein the method step of retrieving data from the plurality of legacy data processing systems comprises:
linking related project data from the plurality of legacy data processing systems into a single common project.

29. A portal collaboration user interface system for providing a user access to data from disparate legacy systems where the user interface comprising computer readable program code devices for:
receiving a request from a user to retrieve data relating to pharmaceutical development from disparate legacy database systems;
sending a query to the disparate legacy database systems responsive to the request from the user;
receiving the data relating to pharmaceutical development from the disparate legacy database systems base on the query; and
collating the data and reformatting the data as standard XML format tagged data for presentation of the data to the user in various formats

30. The user interface system of claim 29 further comprising computer readable program code devices for:
generating an XML defined template format from the XML reformatted data and sending the XML defined template format for presenting to the user using a standard web browser client server interface.

31. The user interface system of claim 30 where
generating the XML defined template format includes generating a template for a synthesis plan for development of a pharmaceutical wherein the synthesis plan is derived from the retrieved data relating to pharmaceutical development.

32. The user interface system of claim 31 where
generating the XML defined template format includes generating a template for chemical synthesis information including molecular drawings and information derived from the retrieved data relating to pharmaceutical development.

33. The user interface system of claim 32 where
generating the XML defined template format includes generating a template for analysis data integrated with the chemical synthesis data where the analysis data is derived from the retrieved data relating to pharmaceutical development.

34. The user interface system of claim 29 further comprising computer readable program devices for:
generating a regulatory submission formatted report from the XML reformatted data for submission.

35. The user interface system of claim 34 where
generating a regulatory submission includes reformatting the generated regulatory submission information according to XML DTDs for additional processing or approvals

36. The user interface system of claim 29 where
retrieving data from disparate legacy database includes retrieving data from at least one of marketing, pharmaceutical, ingredient project management, lab management, analytical services, clinical trial data management and clinical trial statistical analysis legacy database systems.

37. A method in a user interface system for providing a user access to data from disparate legacy systems, comprising:
presenting a prompt to a user requesting an input which specifies retrieval of data relating to pharmaceutical development to be retrieved from disparate legacy database systems;
accepting and processing the user request to determine if the user request relates to generating regulatory submission information or relates to retrieving particular information for presenting to the user;
sending the user request to a portal collaboration user interface system operable to extract data from the disparate legacy database systems based on the request; and
receiving from the portal user interface system data extracted from the disparate legacy database systems collated and formatted in a standard XML format and providing the data to the user.

38. The method as recited in claim 37 where providing data to the user includes:
displaying a synthesis plan for development of a pharmaceutical wherein the synthesis plan is derived from the extracted data.

39. The method as recited in claim 38 where providing data to the user includes:
displaying chemical synthesis information including molecular drawings and chemical reaction information, wherein the chemical synthesis information is derived from the extracted data.

40. The method as recited in claim 39 where providing data to the user includes:
displaying analysis data integrated with the display of the chemical synthesis information wherein the analysis data is derived from the extracted data.
